# EUROPEAN PATENT APPLICATION

(11) **EP 1 369 828 A2**
(43) Date of publication of application: **10.12.2003**
(21) Application number: 03012159.4
(22) Date of filing: 03.06.2003
(51) Int. Cl.: G07F 7/10

(54) **Personalised digital data processing system**

(30) Priority: 04.06.2002 DE 10224767
(71) Applicant: SCM Microsystems GmbH, 85737 Ismaning (DE)
(72) Inventor: Poirier, Emmanuel, Résidence La Coupiane, 83160 La Valette du Var (FR)
(74) Representative: Degwert, Hartmut, Dipl.-Phys.

(57) **Abstract**

A digital data processing system contains a non-volatile memory and is personalised by writing personalising data into the memory. Initially, a predetermined write authorisation bits pattern is written into at least an area of the blank memory. When a write request is received, the contents of that memory area are accessed and read. The memory contents thus read are then compared with the predetermined write authorisation bits pattern. If, and only if, they match, a write operation in the memory area is permitted, and personalising data can be written in the memory area. Otherwise the write request is rejected.

## Description

The present invention relates to a method of personalising a digital data processing system and to a personalised digital data processing system.

When a digital data processing system is intended to be exclusively used with a specific application or by particular user, it can be linked to the specific application or particular user by introducing some "personalising" information that must not thereafter be overwritten. The user or application linked to the system would then need to present to the system some matching data such as a PIN code to be entered with a keypad or a particular code read from a chip-card in order to enable operation of the system. The personalising data are stored in a one-time programmable, non-volatile memory that is either embedded within the system or is a separate component associated with the system in a common package. Fuse technologies are available for one-time programming of a non-volatile memory.

Typically, a digital data processing system for a specific application or use is embodied as an ASIC (Application Specific Integrated Circuit). Although the fuse technologies available for one-time programming of a non-volatile memory exist, it is not often mastered by ASIC manufacturers and these technologies are expensive.

The present invention provides a way to use a usual non-volatile read-write memory as a one-time programmable memory.

Specifically, the invention provides a method of personalising a digital data processing system that contains a non-volatile memory, by writing personalising data into the memory. Initially, a predetermined write authorisation bits pattern is written into at least an area of the blank memory. After the reset of the digital data processing, the contents of that memory area are accessed and read. The memory contents thus read are then compared with the predetermined write authorisation bits pattern. If, and only if, they match, a write operation in the memory area is permitted, and personalising data can be written in the memory area. Otherwise the write request is rejected.

The invention also provides a digital data processing system containing a core processing component and a non-volatile memory within a single package. The non-volatile memory includes either a predetermined write authorisation bits pattern or personalising data. If the write authorisation bits pattern is found in the memory, it may be overwritten with personalising data. If the write authorisation bits pattern is not found, any write request will be rejected during all the session. Thus, in conjunction with the core processing component, the non-volatile memory is in fact a one-time programmable memory.

Further details and advantages of the invention will appear from the following description of preferred embodiments with reference to the appending drawings. In the drawings:
Fig. 1 is a block diagram of a digital data processing system including a one-time programmable, non-volatile memory;
Fig. 2 illustrates an initial write authorisation check phase;
Fig. 3 illustrates a memory chip personalization phase;
Fig. 4 illustrates a subsequent write authorisation check phase;
Fig. 5 illustrates an attempt to modify contents of a personalised memory chip;
Fig. 6 illustrates a subsequent write authorisation check with an erased memory; and
Fig. 7 illustrates an attempt to write into an erased memory.

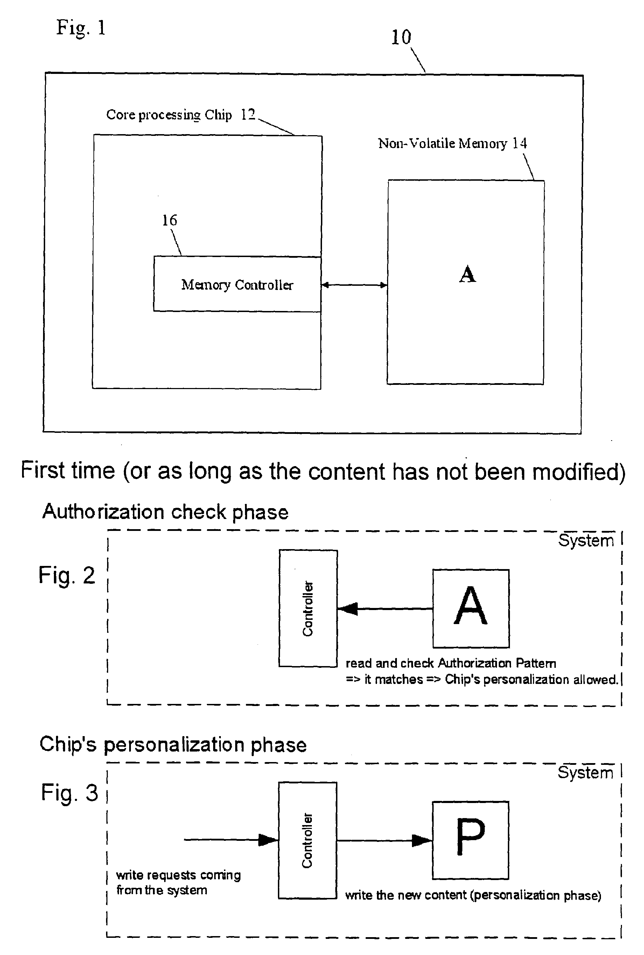

In the non-limitative embodiment shown in Fig. 1, a digital data processing system is materialised in a multi-chip ASIC module. The ASIC module 10, may be a secured processor embedded in a CAM (Conditional Access Module) for use in a DVB (Digital Video Broadcast) environment or embedded in a Smart Card reader for electronic payment application, includes a core processing chip 12 and a non-volatile memory chip14 within a common package. Removal of the memory chip from the package is either destructive to the entire system or at least an operation too costly for misuse on a large scale. The core processing chip 12 includes a memory controller 16 for read-write access to memory chip 14.

In the phase of production, a predetermined write authorisation bits pattern is first written into a blank memory chip before the memory chip 14 is combined with the core processing chip 12 into ASIC module 10. Thereafter, any read or write access to memory chip 14 is possible via memory controller 16, only.

The predetermined write authorisation bits pattern may occupy the entire space of memory chip 14, or only a limited area thereof, preferably from the beginning of memory address space.

A basic functionality of memory controller 16 is to check the presence of the write authorisation bits pattern in memory chip 14 after each reset of the ASIC module 10 and to reject the write request when the bits pattern is not found as expected. After anything different from the predetermined bits pattern has been written into memory 14, any write requests will be rejected. Thus, in conjunction with the functionality of memory controller 16, memory 14 (or an area thereof) is a one-time programmable memory, although it may be embodied in a usual non-volatile memory technology.

In the preferred embodiment, the system has an Hardware controller that includes a write authorisation check procedure performed at each reset or boot-up of the system. When write authorisation is confirmed, the chip can be personalised and the personalising data are written into memory chip 14 via memory controller 16. When write authorisation is not confirmed, the system is considered to be personalised, and the system may execute a particular application, possibly subject to a successful identification of the particular user or of a specific application in relation to the personalising data.

In an other embodiement, replacing the Hardware controller of the preferred embodiement is an operating system that would perform the write access authorization check procedure.

In Figs. 2 to 7, only memory controller 16 and memory chip 14 are shown.

As seen in Fig. 2, the predetermined write authorisation bits pattern "A" has been written into memory 14, as confirmed by memory controller 16 in a write authorisation phase.

In the personalising phase shown in Fig. 3, after the presence of bits pattern "A" has been confirmed, personalising data "P" are written in memory 14.

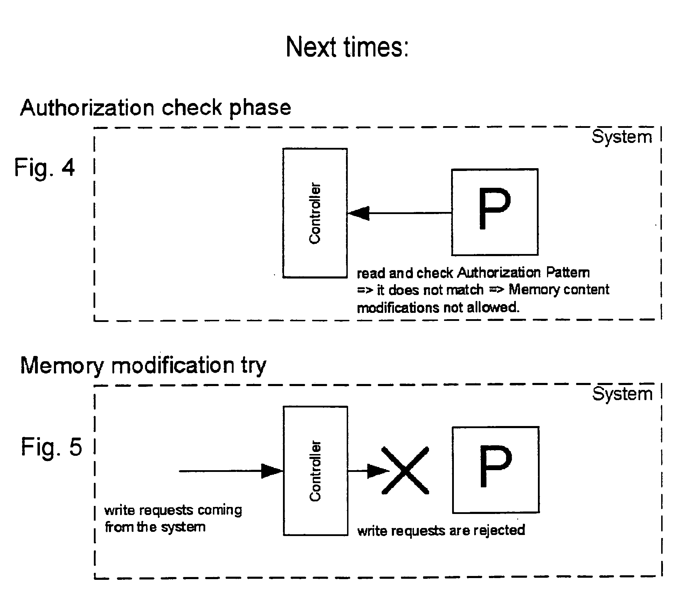

On any subsequent reset or boot-up of the system, a write authorisation check is performed, as seen in Fig. 4. Unless bits pattern "A" is found, any subsequent write request is rejected by memory controller 16.

For example, if personalising data "P" are stored in memory 14, as assumed in Fig. 5, and a write request is received, the request will be rejected.

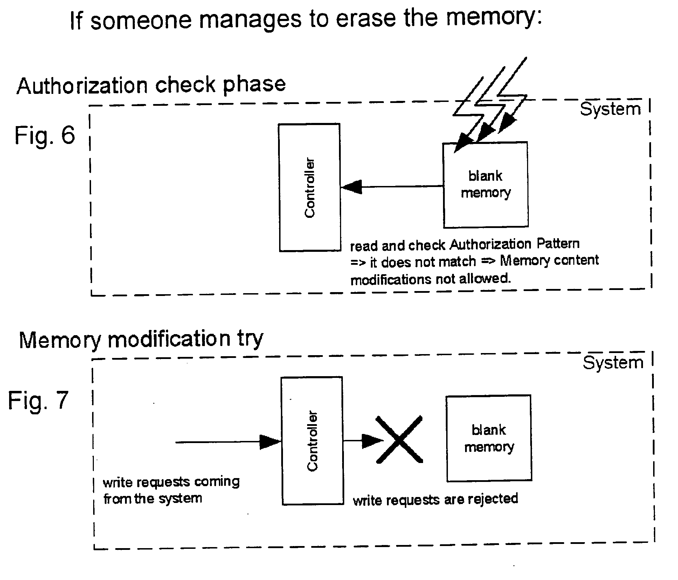

In a possible scenario, the contents of memory 14 are erased by a fraudulent user. In this event, memory 14 is a blank memory, and the predetermined write authorisation bits pattern will not be found in memory 14, as illustrated in Fig. 6. Any subsequent write request will be rejected, as illustrated in Fig. 7.

It is clear from the foregoing scenario that the "predetermined write authorisation bits pattern" should be different from the contents of a blank memory.

As mentioned before, the predetermined write authorisation bits pattern may occupy the entire memory 14 or only an area thereof. The only requirement is that memory controller 16 must know where to seek for it.

Similarly, the personalising data may occupy the entire memory 14 or only an area thereof. The important thing here is that, when personalising data are present in memory 14, the write authorisation bits pattern is at least altered, and any subsequent write request will be rejected.

In an embodiment where only part of memory 14 is to be made "one-time programmable", the size of the one-time programmable memory area is included in the personalising data, such as in the data "P" of Fig. 3. Preferably, the size of that memory area is written at the beginning of the address space of memory 14.

In a further development of that embodiment, the write authorisation pattern contains a one-time programmable memory area size of a default value, which is the size of the entire memory. After the memory contents have been read for the first time in a write authorisation check procedure, and the personalising data "P" are written, they will occupy the entire memory size since this is the default value. However, within the personalising data "P", a new (smaller) size of the one-time programmable memory area is included and is preferably written at the beginning of the memory address space.

After each reset the size of the one-time programmable memory area is read first. Then, the write authorisation check is performed on the memory area defined by the one time programmable size. If write access is not allowed, all write access at addresses being in the range of addresses defined by the one-time programable size is rejected.

Thus, even if the predetermined write authorisation bits pattern is written into the entire memory, only a limited area of the memory is needed for personalising the system.

Even if the predetermined write authorisation bits pattern was disclosed, the personalising data could not be altered because no write operation whatsoever is permitted once the original write authorisation bits pattern has been altered.

In an embodiment where memory 14 is embedded inside the die of an ASIC, a protected mechanism for initially writing the write authorisation bits pattern into the blank memory is provided.

In yet another embodiment, memory 14 is a discrete memory component. In this case, the memory component and all other components of the system are packaged in a manner such that removal of the memory component is at least difficult, and preferably destructive to the entire system.

## Claims

1. A method of personalising a digital data processing system that contains a non-volatile memory, by writing personalising data into said memory, comprising the steps of
- writing a predetermined write authorisation bits pattern into at least an area of said memory;
- in response to a write request, accessing and reading contents of said memory area;
- comparing said contents with the predetermined write authorisation bits pattern;
- enabling a write operation in at least said memory area if the contents equal the predetermined write authorisation bits pattern; and
- disabling a write operation in said memory area if the contents differ from the predetermined write authorisation bits pattern.

2. The method of claim 1, wherein the digital system is provided by its manufacturer with said predetermined write authorisation bits pattern written into said memory area.

3. The method of claim 1 or claim 2, wherein said system is provided as a single package including said non-volatile memory, and removal of said non-volatile memory from said package is destructive to the system.

4. The method of any of claims 1 to 3, wherein the digital data processing system is provided with an operating system that includes a check procedure for reading and comparing the contents of said memory area.

5. The method of claim 4, wherein said check procedure is included in a reset or boot procedure of said operating system.

6. The method of claim 5, wherein said check procedure is part of basic functionality of a memory controller included in said digital data processing system.

7. The method of any of claims 1 to 6, wherein the personalising data include header information indicative of the size of said memory area within the non-volatile memory.

8. The method of claim 7, wherein the write authorisation bits pattern includes a default information indicative of the size of said memory area within the non-volatile memory.

9. The method of claim 8, wherein said default information is initially indicative of the entire size of said non-volatile memory and subsequently written personalising data include header data indicative of a memory area to be checked for the presence of said write authorisation bits pattern.

10. A digital data processing system containing at least a core processing component and a non-volatile memory within a single package, wherein said non-volatile memory includes either a predetermined write authorisation bits pattern or personalising data.

11. The digital data processing system of claim 10, wherein removal of said non-volatile memory from the package is destructive to the system.

12. The digital data processing system of claim 10 or claim 11, and constituting an ASIC (Application Specific Integrated Circuit).

13. A personalised digital data processing system as obtained by performing the method of any of claims 1 to 9.

14. The digital data processing system of any of claims 10 to 13, and constituting at least part of a conditional access module.

15. The digital data processing system of any of claims 10 to 13, and constituting at least part of a smart card reader.
